# EUROPÄISCHE PATENTANMELDUNG

(11) **EP 4 696 118 A1**
(43) Veröffentlichungstag der Anmeldung: **18.02.2026**
(21) Anmeldenummer: 25195026.7
(22) Anmeldetag: 11.08.2025
(51) Int. Cl.: A01B 19/02, A01B 23/02, A01B 35/24, A01B 39/18, A01B 63/111

(54) **LANDWIRTSCHAFTLICHES ARBEITSGERÄT**

(30) Priorität: 12.08.2024 DE 102024122960
(71) Anmelder: Lemken GmbH & Co KG, 46519 Alpen (DE)
(72) Erfinder: Bergemann, Christian, 46244 Bottrop (DE); Derksen, Lukas, 46519 Alpen (DE); Hätzel, Eric, 47447 Moers (DE); Janßen, Michael, 47626 Kevelaer (DE); Walter, Jannik, 49078 Osnabrück (DE)

(57) **Zusammenfassung**

Die vorliegende Erfindung betrifft ein landwirtschaftliches Arbeitsgerät zur Bodenbearbeitung mit einem Rahmen, welcher mindestens einen Werkzeugrahmen umfasst, einer Mehrzahl von verschwenkbar an dem mindestens einen Werkzeugrahmen angeordneten Bodenwerkzeugen, insbesondere Striegelzinken, und einer, insbesondere fluidbeaufschlagbaren, Vorspanneinrichtung zum Vorspannen der Bodenwerkzeuge mittels einer Vorspannkraft, wobei die Vorspanneinrichtung mindestens ein Verbindungselement umfasst, durch welches mindestens ein Bodenwerkzeug mit einem Vorspannelement der Vorspanneinrichtung wirkverbunden ist. Gemäß der Erfindung ist zwischen der Vorspanneinrichtung und einem bodenseitigen Ende des Bodenwerkzeuges eine Koppeleinrichtung zur Verbindung zweier Bauteile angeordnet, wobei die Koppeleinrichtung derart ausgebildet ist, dass die verbundenen Bauteile zumindest in einem Bereich im Wesentlichen kräftefrei relativ zueinander bewegbar sind.

## Beschreibung

Die vorliegende Erfindung betrifft ein landwirtschaftliches Arbeitsgerät zur Bodenbearbeitung.

Bei der landwirtschaftlichen Bodenbearbeitung werden unterschiedliche Werkzeuge eingesetzt, welche an einen Traktor angehängt oder angebaut werden können. Für eine mechanische Unkrautbekämpfung werden üblicherweise Zinkenstriegel oder Hackstriegel eingesetzt, die oberflächennah durch den zu bearbeitenden Boden geführt werden und dabei mechanisch Unkräuter ausreißen und/oder mit Erde verschütten. Die Zinkenstriegel werden dabei häufig mit mehreren Zinkenstriegeln nebeneinander und in mehreren Reihen hintereinander angeordnet und üblicherweise durch Federn oder Federpakete mit einer Vorspannkraft beaufschlagt.

Ein gattungsgemäßes Bodenbearbeitungsgerät mit Zinkenstriegeln als Bodenbearbeitungswerkzeuge ist in DE 202012004337 U1 offenbart. Hierbei sind die Zinkenstriegel an einem Traggestell verschwenkbar angeordnet und jeweils über eine Vorspannfeder gegen einen Anschlag vorgespannt. Eine Vorspannkraft der Vorspannfedern kann gruppenweise durch einen Bediener des Bodenbearbeitungsgerätes verändert werden. Eine Vorspannfeder ist hier jeweils aus zwei hintereinander geschalteten Federn gebildet, wodurch bei einer Auslenkung des zugehörigen Striegelzinkens zunächst eine erste Feder und nach einer bestimmten Auslenkung eine zweite Feder zur Wirkung gelangt. Die auf den Zinken und somit bei der Bodenbearbeitung wirkende Kraft ist allein aufgrund der Federkennlinien nicht konstant und variiert je nach Auslenkung der Striegelzinken, wodurch es zu einer ungleichmäßigen Bearbeitung des Bodens kommen kann. Zudem kann die Vorspannkraft nur auf ein Minimum reduziert werden, da immer ein Teil der Federgewichtskraft und der Verbindungselementgewichtskraft mit auf den Striegelzinken wirkt.

Es ist daher die Aufgabe der vorliegenden Erfindung ein landwirtschaftliches Arbeitsgerät zur Bodenbearbeitung anzugeben, welches zumindest einige oben genannte Nachteile behebt.

Die Aufgabe wird gelöst durch ein Arbeitsgerät gemäß den Merkmalen des Anspruches 1. Vorteilhafte Ausgestaltungen der Erfindung sind in den Unteransprüchen angegeben.

Ein landwirtschaftliches Arbeitsgerät zur Bodenbearbeitung mit einem Rahmen, welcher mindestens einen Werkzeugrahmen umfasst, einer Mehrzahl von verschwenkbar an dem mindestens einen Werkzeugrahmen angeordneten Bodenwerkzeugen, insbesondere Striegelzinken, und einer, insbesondere fluidbeaufschlagbaren, Vorspanneinrichtung zum Vorspannen der Bodenwerkzeuge mittels einer Vorspannkraft, wobei die Vorspanneinrichtung mindestens ein Verbindungselement umfasst, durch welches mindestens ein Bodenwerkzeug mit einem Vorspannelement der Vorspanneinrichtung wirkverbunden ist. Gemäß der Erfindung ist zwischen der Vorspanneinrichtung und einem bodenseitigen Ende des Bodenwerkzeuges eine Koppeleinrichtung zur Verbindung zweier Bauteile angeordnet, wobei die Koppeleinrichtung derart ausgebildet ist, dass die verbundenen Bauteile zumindest in einem Bereich im Wesentlichen kräftefrei relativ zueinander bewegbar sind.

Die Vorspanneinrichtung kann hydraulisch und/oder pneumatisch betätigbare Vorspannelemente, insbesondere in Form von Kolben, aufweisen, durch welche die Bodenwerkzeuge mit einer Vorspannkraft beaufschlagt werden können. Die Vorspannelemente können auch Dämpfer, Federn oder Federpakete aufweisen. Über Verbindungselemente, beispielsweise in Form von Drähten und/oder Stäben, können die Bodenwerkzeuge jeweils mit der Vorspanneinrichtung bzw. deren Vorspannelementen zur Übertragung der Vorspannkraft wirkverbunden sein. In der Übertragungsstrecke der Vorspannkraft von der Vorspanneinrichtung bis hin zu einem bodenseitigen Ende eines Bodenwerkzeuges kann eine Koppeleinrichtung angeordnet sein. Die Koppeleinrichtung kann zumindest zwei Bauteile relativ zueinander bewegbar verbinden, wobei die Koppeleinrichtung derart ausgebildet ist, dass die verbundenen Bauteile zumindest in einem Bereich im Wesentlichen kräftefrei, insbesondere vorspannkraftfrei, relativ zueinander bewegbar sind. Eine Übertragung der Vorspannkraft kann außerhalb des Bereiches kraftschlüssig und/oder formschlüssig erfolgen. Die Koppeleinrichtung kann beispielsweise in Form von ineinandergreifenden Schlingen oder Ösen ausgebildet sein. Die Koppeleinrichtung hat den Effekt, dass in dem Bereich der kräftefreien Relativbewegung im Wesentlichen keine Kräfte, beispielsweise Vorspannkräfte und/oder Gewichtskräfte der Verbindungselemente, auf das Bodenwerkzeug wirken. Hierdurch kann eine Aufstandskraft eines Bodenwerkzeuges rein auf das Eigengewicht des Bodenwerkzeuges, insbesondere in Form eines Striegelzinkens, reduziert werden. Einflüsse der Vorspanneinrichtung und/oder der Verbindungselemente werden durch die kräftefreie Relativbewegung der Koppeleinrichtung kompensiert. Die Aufstandskraft des Bodenwerkzeuges bzw. Striegelzinkens auf den Boden kann dabei über den Verfahrweg des Striegelzinkens konstant bleiben. Dies ist besonders bei anfälligen Kulturen oder schwierigen Bodenverhältnissen von Vorteil.

In einer vorteilhaften Ausgestaltung ist die Koppeleinrichtung an und/oder zwischen der Vorspanneinrichtung, dem Verbindungselement und/oder dem Bodenwerkzeug angeordnet. Die Koppeleinrichtung kann innerhalb oder zumindest teilweise an einem Bauteil, wie der Vorspanneinrichtung, dem Verbindungselement und/oder dem Bodenwerkzeug, ausgebildet sein. Eine Koppeleinrichtung in Form von beispielsweise ineinandergreifenden Schlingen oder Ösen kann an zwei zu verbindenden Bauteilen je eine Schlinge oder Öse ausbilden, welche dann spielbehaftet miteinander verbunden sein können. Zudem kann die Koppeleinrichtung in ein Verbindungselement und/oder die Vorspanneinrichtung, insbesondere in ein Vorspannelement, integriert sein. Dies hat den Vorteil, dass die Koppeleinrichtung bauraumsparend in das Arbeitsgerät integriert werden kann.

In einer besonders bevorzugten Ausgestaltung umfasst das Bodenwerkzeug einen schwenkbar an dem Werkzeugrahmen angeordneten Werkzeughalter, wobei die Koppeleinrichtung in dem Werkzeughalter ausgebildet ist. Der Werkzeughalter kann um eine Schwenkachse verschwenkbar an dem Werkzeugrahmen angeordnet sein. Hierdurch kann das Bodenwerkzeug zwischen einer Transportposition und einer Arbeitsposition des Arbeitsgerätes verschwenkt werden. Der Werkzeughalter kann ein vereinfachtes Wechseln eines Bodenwerkzeuges ermöglichen, wobei der Werkzeughalter an dem Werkzeugrahmen verbleiben kann. Das Verbindungselement des Bodenwerkzeuges kann in dem Werkzeughalter und insbesondere in der Koppeleinrichtung beweglich gelagert sein. Dies hat den Vorteil, dass bei einem Wechsel des Bodenwerkzeuges der Werkzeughalter und damit das Verbindungselement an dem Werkzeugrahmen gelagert bleiben können, wodurch ein Montageaufwand deutlich reduziert werden kann.

Vorzugsweise weist die Koppeleinrichtung mindestens einen Anschlag zur Begrenzung der Relativbewegung auf. Ein Anschlag kann die Relativbewegung der verbundenen Bauteile beenden, so dass sich in dem Anschlag kontaktierende Bauteile gleichförmig miteinander bewegen. Hierbei kann beispielsweise eine Vorspannkraft zwischen den Bauteilen übertragen werden. Ein Bereich in dem eine im Wesentlichen kraftfreie Relativbewegung zweier Bauteile zueinander erfolgen kann, kann durch einen ersten und einen zweiten Anschlag begrenzt sein. Dies hat den Vorteil, dass neben dem kraftfreien Bereich an den jeweiligen Anschlägen Kräfte, insbesondere Zugkräfte und Druckkräfte, übertragbar sind.

Besonders bevorzugt ist die Koppeleinrichtung als Langloch ausgebildet. Ein Langloch kann einen Bereich im Wesentlichen kraftfreier Relativbewegung ermöglichen und gleichzeitig einen ersten und einen zweiten Anschlag aufweisen, welche die Relativbewegung beenden und die Übertragung von Kräften ermöglichen. Das Langloch kann in dem Werkzeughalter ausgebildet sein, wobei das Verbindungselement, beispielsweise mit einem abgewinkelten Endbereich, in das Langloch eingreifen kann. Dadurch kann zwischen dem Werkzeughalter und dem Verbindungselement zwischen dem ersten und zweiten Anschlag in einem Bereich eine im Wesentlichen kräftefreie Relativbewegung erfolgen. Die Koppeleinrichtung in Form eines Langloches bietet den Vorteil einer geführten Lagerung, beispielsweise des Verbindungselementes in dem Werkzeughalter.

In einer weiter bevorzugten Ausgestaltung ist der Werkzeughalter zur Aufnahme des Bodenwerkzeuges einstückig oder mehrteilig, insbesondere aus zwei Halbschalen, ausgebildet. Der einstückig ausgebildete Werkzeughalter zur Aufnahme eines Bodenwerkzeuges kann beispielsweise ein Spritzgussbauteil sein. Die Halbschalen eines mehrteilig ausgebildeten Werkzeughalters können formschlüssig, beispielsweise durch eine Klippverbindung und/oder durch eine Schraubverbindung lösbar verbunden sein. Das Bodenwerkzeug kann in einem montierten Zustand zwischen den Halbschalen angeordnet sein. Ein in dem Werkzeughalter aufgenommenes Bodenwerkzeug kann durch einen Montagebolzen gegen unbeabsichtigtes Lösen gesichert sein.

Weitere Einzelheiten der Erfindung sind den Figuren und der Figurenbeschreibung zu entnehmen, die eine bevorzugte Ausführung der Erfindung zeigen.

Es zeigen:
- Fig 1:: eine seitliche Teilansicht eines Arbeitsgerätes mit jeweils an einem Werkzeugrahmen angeordneten Bodenwerkzeugen;
- Fig. 2:: eine Detailansicht eines Bodenwerkzeuges mit einem Werkzeughalter und darin angeordneter Koppeleinrichtung;
- Fig. 3:: eine Seitenansicht eines Bodenwerkzeuges in einer Transportposition; und
- Fig. 4:: eine Seitenansicht des in Figur 3 gezeigten Bodenwerkzeuges in einer Arbeitsposition.

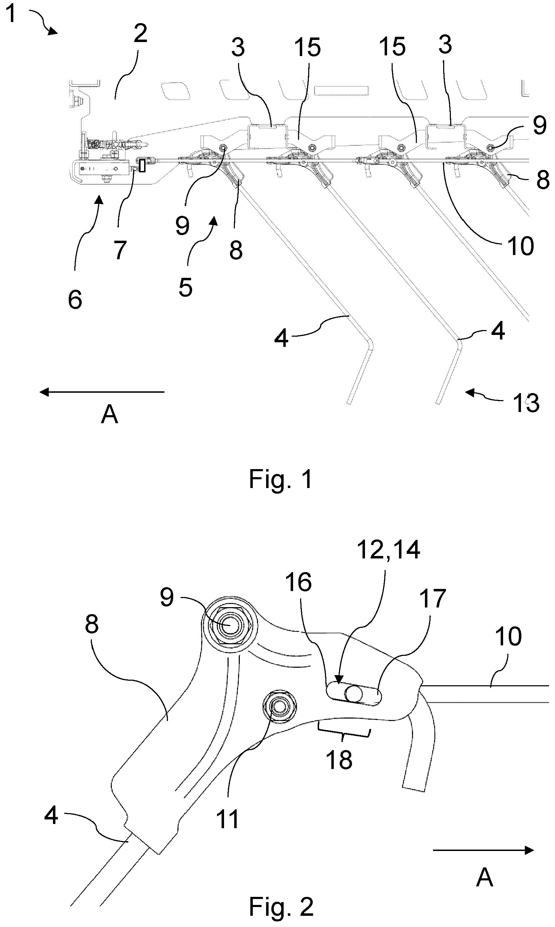

**In** Figur 1 ist eine Teilansicht eines landwirtschaftlichen Arbeitsgerätes 1 zur Bodenbearbeitung mit einem Rahmen 2 dargestellt, welcher eine Koppelvorrichtung (nicht dargestellt) zur Verbindung des Arbeitsgerätes 1 mit einem Zugfahrzeug (nicht dargestellt) aufweist. Der Rahmen 2 umfasst mehrere parallel zu einer Arbeitsrichtung A angeordnete Werkzeugrahmen 3, wobei an jedem Werkzeugrahmen 3 beabstandet zueinander mehrere Bodenwerkzeuge 4 verschwenkbar angeordnet sind. Die Bodenwerkzeuge 4 in Form von Striegelzinken sind jeweils an einer Lagerstelle 5 angeordnet und über ein Lagerelement 15 mit dem Rahmen 2, insbesondere dem Werkzeugrahmen 3, schwenkbar verbunden.

Die Bodenwerkzeuge 4 sind in einer abgesenkten Arbeitsposition dargestellt und können in eine Transportposition angehoben werden, in der die Bodenwerkzeuge 4 im Wesentlichen an einer Unterseite der Werkzeugrahmen 3 anliegen. Für die Bodenbearbeitung müssen die Bodenwerkzeuge 4 mindestens mit einer bestimmten Kraft auf den Boden wirken, um beispielsweise unerwünschte Unkräuter auszureißen. Hierfür weist das Arbeitsgerät 1 eine Vorspanneinrichtung 6 auf, durch welche die Bodenwerkzeuge 4 mit einer einstellbaren Vorspannkraft beaufschlagt werden können. Die Vorspanneinrichtung 6 weist dabei mindestens zwei fluidgefüllte Vorspannelement 7 auf, wobei das Fluid Luft oder eine Flüssigkeit wie Öl sein kann. Die dargestellte Arbeitsmaschine 1 weist eine Mehrzahl an fluidgefüllten Vorspannelementen 7 auf. Dabei kann beispielsweise jedes Vorspannelement 7 eine mit mindestens einem Kolbenraum verbundene Kolbenstange aufweisen. Jedes Vorspannelement 7 ist dabei mindestens einem Bodenwerkzeug 4 zugeordnet. Die Bodenwerkzeuge 4 sind dabei über Verbindungselemente 10 mit jeweils einem Vorspannelement 7 verbunden.

Gemäß der Erfindung ist zwischen der Vorspanneinrichtung 6 und einem bodenseitigen Ende 13 eines Bodenwerkzeuges 4 eine Koppeleinrichtung 14 zur Verbindung zweier Bauteile angeordnet, wobei die Koppeleinrichtung 14 derart ausgebildet ist, dass die verbundenen Bauteile zumindest in einem Bereich 18 im Wesentlichen kräftefrei relativ zueinander bewegbar sind.

Die Koppeleinrichtung 14 (Fig. 2) ist in dem Werkzeughalter 8 in Form eines Langloches 12 ausgebildet. Die Koppeleinrichtung 14 ist dabei vorspanneinrichtungsseitig der Schwenkachse 9 des Bodenwerkzeuges 4 bzw. des Werkzeughalters 8 in dem Werkzeughalter 8 ausgebildet. Der Werkzeughalter 8 ist einstückig ausgestaltet, wobei das Bodenwerkzeug 4 in Form des Striegelzinkens durch einen Montagebolzen 11 an dem Werkzeughalter 8 befestigt ist. Die Koppeleinrichtung 14 in Form eines Langloches 12 weist einen ersten Anschlag 16 und einen zweiten Anschlag 17 auf, welche einen Bereich 18 begrenzen, in dem eine im Wesentlichen kräftefreie Relativbewegung zwischen den verbundenen Bauteilen, dem Verbindungselement 10 und dem Werkzeughalter 8, ermöglicht werden kann. In die Koppeleinrichtung 14 bzw. das Langloch 12 greift ein werkzeugseitiges Ende des Verbindungselementes 10 ein. Das Verbindungselement 10 ist dabei beabstandet zu den Anschlägen 16, 17 in dem Bereich 18 angeordnet. In dieser Anordnung, einer sogenannten Schwimmstellung, kann keine Vorspannkraft auf das Werkzeug 4 übertragen werden, da das Verbindungselement 10 und der Werkzeughalter 8 sich kräftefrei relativ zueinander bewegen können. Dies hat den Effekt, dass das Bodenwerkzeug 4 bzw. der Striegelzinken nur mit seiner Gewichtskraft auf dem zu bearbeitenden Boden aufsteht.

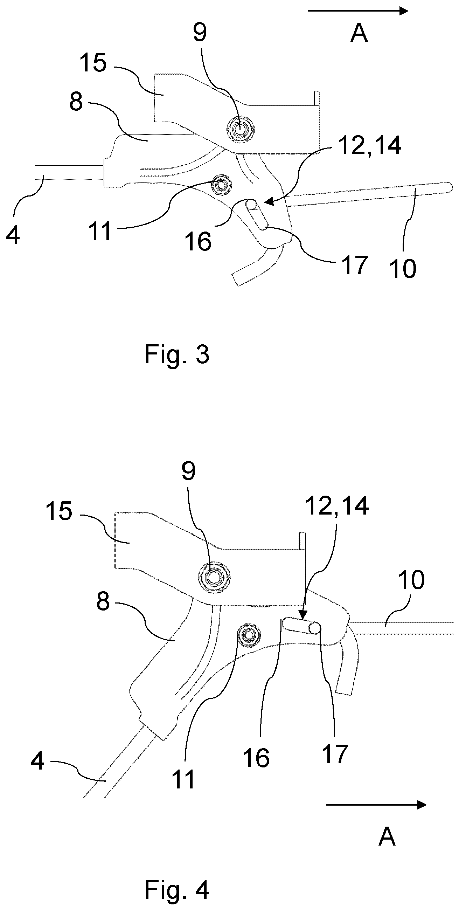

In Figur 3 ist das Bodenwerkzeug 4 mit dem Werkzeughalter 8 um die Schwenkachse 9 in eine Transportposition verschwenkt dargestellt. Das Verbindungselement 10 greift in die Koppeleinrichtung 14 in Form des Langloches 12 ein. Das Verbindungselement 10 liegt dabei an dem ersten Anschlag 16 an, wodurch eine Druckkraft von der Vorspanneinrichtung 6 auf den Werkzeughalter 8 übertragbar ist. Dies bewirkt ein Verschwenken des Werkzeughalters 8 und des Bodenwerkzeuges 4 in die Transportposition. In Figur 4 ist das Bodenwerkzeug 4 bzw. der Werkzeughalter 8 in eine Arbeitsposition verschwenkt dargestellt. Das in die Koppeleinrichtung 14 bzw. das Langloch 12 eingreifende Verbindungselement 10 liegt hierbei an dem zweiten Anschlag 17 an. Dies ermöglicht die Übertragung einer Vorspannkraft von der Vorspanneinrichtung 6 auf das Bodenwerkzeug 4.

### Bezugszeichen

| | | | |
|---|---|---|---|
| 1 | Arbeitsgerät | A | Arbeitsrichtung |
| 2 | Rahmen | | |
| 3 | Werkzeugrahmen | | |
| 4 | Bodenwerkzeug | | |
| 5 | Lagerstelle | | |
| 6 | Vorspanneinrichtung | | |
| 7 | Vorspannelement | | |
| 8 | Werkzeughalter | | |
| 9 | Schwenkachse | | |
| 10 | Verbindungselement | | |
| 11 | Montagebolzen | | |
| 12 | Langloch | | |
| 13 | Bodenseitiges Ende | | |
| 14 | Koppeleinrichtung | | |
| 15 | Lagerelement | | |
| 16 | Erster Anschlag | | |
| 17 | Zweiter Anschlag | | |
| 18 | Bereich | | |

## Patentansprüche

1. Landwirtschaftliches Arbeitsgerät zur Bodenbearbeitung mit einem Rahmen (2), welcher mindestens einen Werkzeugrahmen (3) umfasst, einer Mehrzahl von verschwenkbar an dem mindestens einen Werkzeugrahmen (3) angeordneten Bodenwerkzeugen (4), insbesondere Striegelzinken, und einer, insbesondere fluidbeaufschlagbaren, Vorspanneinrichtung (6) zum Vorspannen der Bodenwerkzeuge (4) mittels einer Vorspannkraft, wobei die Vorspanneinrichtung (6) mindestens ein Verbindungselement (10) umfasst, durch welches mindestens ein Bodenwerkzeug (4) mit einem Vorspannelement (7) der Vorspanneinrichtung (6) wirkverbunden ist,
**dadurch gekennzeichnet, dass**
zwischen der Vorspanneinrichtung (6) und einem bodenseitigen Ende (13) des Bodenwerkzeuges (4) eine Koppeleinrichtung (14) zur Verbindung zweier Bauteile angeordnet ist, wobei die Koppeleinrichtung (14) derart ausgebildet ist, dass die verbundenen Bauteile zumindest in einem Bereich (18) im Wesentlichen kräftefrei relativ zueinander bewegbar sind.

2. Arbeitsgerät nach Anspruch 1, **dadurch gekennzeichnet, dass** die Koppeleinrichtung (14) an und/oder zwischen der Vorspanneinrichtung (6), dem Verbindungselement (10) und/oder dem Bodenwerkzeug (4) angeordnet ist.

3. Arbeitsgerät nach Anspruch 1 oder 2, **dadurch gekennzeichnet, dass** das Bodenwerkzeug (4) einen schwenkbar an dem Werkzeugrahmen (3) angeordneten Werkzeughalter (8) umfasst, wobei die Koppeleinrichtung (14) in dem Werkzeughalter (8) ausgebildet ist.

4. Arbeitsgerät nach einem der vorherigen Ansprüche, **dadurch gekennzeichnet, dass** die Koppeleinrichtung (14) mindestens einen Anschlag (15, 16) zur Begrenzung der Relativbewegung aufweist.

5. Arbeitsgerät nach einem der vorherigen Ansprüche, **dadurch gekennzeichnet, dass** die Koppeleinrichtung (14) als Langloch (12) ausgebildet ist.

6. Arbeitsgerät nach einem der vorherigen Ansprüche, **dadurch gekennzeichnet, dass** der Werkzeughalter (8) zur Aufnahme des Bodenwerkzeuges (4) einstückig oder mehrteilig, insbesondere aus zwei Halbschalen, ausgebildet ist.
